# EUROPEAN PATENT APPLICATION

(11) **EP 4 411 075 A1**
(43) Date of publication of application: **07.08.2024**
(21) Application number: 22875239.0
(22) Date of filing: 14.09.2022
(51) Int. Cl.: E02D 27/42, F03D 13/20, E04H 12/22

(54) **METHOD FOR CONSTRUCTING A RIBBED FOUNDATION FOR WIND TURBINES AND RIBBED FOUNDATION OBTAINED**

(30) Priority: 29.09.2021 ES 202130911
(71) Applicant: INGECID, S.L., 39005 Santander (ES)
(72) Inventor: RICO ARENAL, Jokin, 39005 Santander (Cantabria) (ES); HELGUERA LÓPEZ, David, 39005 Santander (Cantabria) (ES); GONZÁLEZ GALVÁN, Julio Cesar, 39005 Santander (Cantabria) (ES); SÁNCHEZ HARO, Javier, 39005 Santander (Cantabria) (ES)
(74) Representative: García Gómez, José Donato
(86) International application number: PCT/ES2022/070581
(87) International publication number: WO 2023/052662

(57) **Abstract**

Disclosed is a method comprising: placing a central steel ferrule (2) on a central reinforcement mesh (1); installing around the central ferrule (2) a central assembly (3) and prefabricated pieces (4, 5) comprising a concrete beam (4) and a steel strut (5); assembling (61) sections between the bases (43) of the beams (4), and filling in (62) the central assembly (3); installing formwork (71, 72, 73) around the central assembly (3), the infill (62) and the outer perimeter; and obtaining, by means of simultaneous concreting, a monolithic concrete foundation (10) in which the ends of the struts are embedded, thus forming the ribbed foundation.

## Description

### Technical Field

The present invention is applicable in the construction of foundations for the support of wind turbine towers.

### Prior state-of-the-art

Currently, different types of foundations are known for the support of wind turbines, which generally comprise a central shaft, a horizontal, continuous or discontinuous slab, and a series of prefabricated braces attached to each other and to the central shaft by different means.

Specifically, a first type includes the foundations with prefabricated braces for gravity foundations with post-bracing in the braces and that include a lower perimeter beam and an upper one, at the head of the pedestal, which as the slab and the pedestal are also made "in situ".

In this first type of foundations, it is possible to increase the size of the prefabricated braces in order to eliminate the perimeter beam at the base, maintaining the post-bracing and the "in situ" making of the slab, the pedestal and the upper beam.

The slab, the pedestal, and the perimeter beams of reinforced concrete are built "in situ" in different construction phases.

A second type of foundation, described in EP2475872A, uses prefabricated parts with post-bracing on site: a post-bracing on the lower slab and another on the pedestal.

A third type includes foundations of 14 to 24 mts. in diameter with a single mould. The foundation consists of 26 pieces: 2 central rings and 8 outer perimeter slabs, 8 inner perimeter slabs and 8 radial ribs. The volume of the foundation may vary from 250 m³ to 300 m³ with approximately 43 Tn. of passive steel and 4000 kg. of active steel in bars for post-bracing of the joints between the pedestal and the ribs. The joints between outer slabs and between ribs and slabs are made with passive reinforcement. Up to 3 foundations/week can be made.

A fourth type of foundation, described in DE102019126587A1, includes a series of reinforced concrete parts and metal connecting elements for joining them together, preferably with metal flanges.

In one embodiment of said foundation, each of the prefabricated ribs has a metal profile at its top that is attached by flanges to the central metal part. In this way, the central massive block that the ribs have in the previous option is eliminated.

In US2017030045A1 a fifth type of foundation is described, consisting of 6 to 8 high-strength prefabricated beams, with anchoring systems to the ground, and ground improvements.

The aforementioned background generally have drawbacks in that they require a large amount of concrete for their construction and the construction of different parts in successive phases and with concrete pours spaced over time in those cases in which construction is carried out "in situ", which can lead to an increase in construction time.

Therefore, the technical problem that arises is the development of a method for constructing a ribbed foundation for wind turbines that allows reducing the amount of concrete necessary for their construction, and simplifying the construction and execution time of the foundation.

### Summary of the invention

To achieve the proposed objects, the method of the invention is based on the combination of metal elements and prefabricated concrete elements, and their integration by pouring concrete, in a single construction phase, on metal assemblies and metal connectors integral with said metal elements.

Specifically, the method for constructing a ribbed foundation for wind turbines, object of the invention, comprises:
- placing a central reinforcing mesh on the ground, in the area chosen for the location of the wind turbine;
- providing a central steel ferrule having connecting bolts distributed throughout its outer surface,
- placing said central ferrule, with its geometrical axis in vertical position, on the central reinforcing mesh,
- installing a central assembly around the central ferrule, so that the connecting bolts are housed in said central assembly,
- providing prefabricated pieces comprising:
   - a concrete beam having a first end, a second end, a base from which reinforcing rods protrude laterally, and an upper section from which reinforcing rods protrude from the second end of the beam and,
   - a steel strut with a first end embedded in the corresponding beam and a second end that protrudes in the longitudinal direction with an upward inclination relative to said beam and having connecting bolts;
   - placing said prefabricated pieces on the ground, radially arranged with respect to the central ferrule and evenly distributed around it; so that the second end of the beams faces the perimeter of the central reinforcing mesh and the second end of the struts, bearing connecting bolts, is housed in the central assembly;
   - assembling sections comprised between the bases of the successive radial beams and the massive block of the central assembly in the area facing the beams;
   - installing formworks around the central assembly, the massive block of the central assembly and the outer perimeter of the bases of the beams and of the assemblies existing between them;
   - obtaining, by means of the simultaneous concreting of all the formwork areas, a monolithic concrete foundation that integrates the metal parts and that includes: portions of slab between the beams, a central concrete ferrule, a central massive block and the concrete beams (4) themselves.

This method of construction makes it possible to significantly reduce the amount of concrete used by the use of steel struts included in the concrete prefabricated pieces.

In addition, the connecting bolts of the central ferrule and the steel struts provide a technical advantage by acting as a connecting element thereof with the central assembly, positioned around the central steel ferrule; likewise, the reinforcing rods, which protrude frontally and laterally from the prefabricated concrete beams, act as connecting elements with the assemblies located between said prefabricated beams, and with the central assembly and the massive block located around the central steel ferrule.

The aforementioned connecting bolts and reinforcing rods allow the placement of the different metal elements (ferrule, struts and assemblies) and the prefabricated reinforced concrete beam in their final positions, and the placement of the perimeter formwork, to perform the pouring of the concrete in the formwork areas in the same phase and obtain in a single operation and in a short space of time the entire foundation.

The connecting fittings of the ferrule work together with the concrete and the metal ferrule forming a mixed section, and the connecting fittings of the steel strut integrate the steel tube of the strut with the concrete section, so that the loads of the concrete part are transmitted to the metal part or vice versa only by embedding the tube in the concrete, which facilitates prefabrication and subsequent installation with the central concrete shaft that surrounds the ferrule.

The use of these connecting fittings constitutes an important constructive advantage over other alternatives, such as welding or screwing steel struts to the metal ferrule.

According to the invention, this method of construction comprises the use of a ferrule with a cylindrical or polygonal section, with a vertical axis, which is arranged internally with respect to the central concrete ferrule and fixed to it by the external connecting fittings, which is a structural advantage since the central steel ferrule does not generate a discontinuity in the concrete of the central ferrule and prevents the occurrence of structural damages therein.

The method of the invention comprises the use of a central steel ferrule comprising a welded flange at its upper end for screwing the tower of the wind turbine onto it.

This invention also includes the ribbed foundation constructed according to the method described above, the characteristics of which are set forth in the claims and will be understood in view of the detailed disclosure of the embodiment included in the figures described below.

### Brief description of the contents of the drawings

In order to complement the description that is being carried out and with the purpose of facilitating the understanding of the characteristics of the invention, the present patent specification is accompanied by a set of drawings wherein, by way of illustration and non-limiting example, the following has been represented:
- Figure 1 shows a perspective view of a ribbed foundation for wind turbines constructed according to the method of the invention.
- Figures 2 to 10 represent the successive method steps of the method for constructing a ribbed foundation for wind turbines, according to the invention.

### Detailed explanation of embodiments of the invention

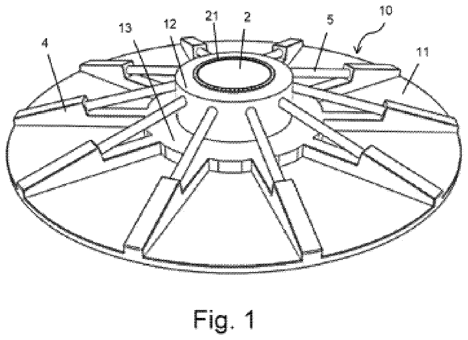

Figure 1 shows a perspective view of an example of embodiment of a foundation (10) constructed in accordance with the method of the invention and comprising a central steel ferrule (2), peripherally surrounded by a central ferrule (12) and a central concrete massive block (12) formed together with portions of a concrete slab (11) located between prefabricated parts comprising concrete beams (4) and steel struts (5) having their ends embedded in the respective beams (4) and in the central concrete ferrule (12).

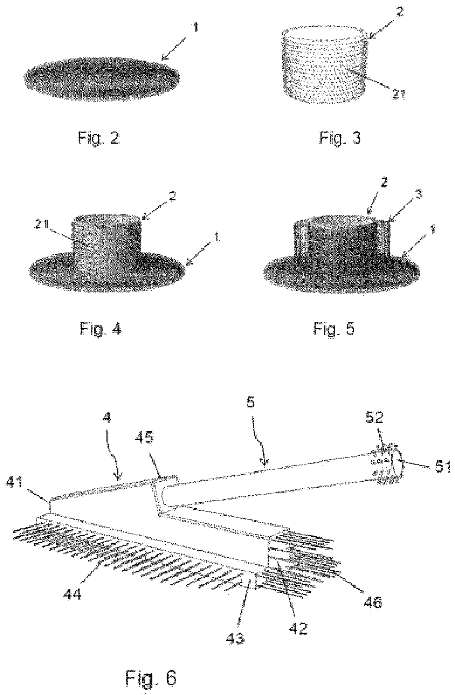

As shown in Figures 2 to 10, the method of the invention comprises the following steps:
Initially, the placement on the ground of a central reinforcing mesh (1) as shown in the figure; the provision of a central steel ferrule (2), shown in Figure 2 and provided with connecting bolts (21) on its outer surface and its placement, with its geometrical axis in a vertical position, on the central reinforcing mesh (1) as shown in Figure 4, and the installation of a central assembly (3) around the central ferrule (2), so that the connecting bolts (21) are housed in said central assembly (3) as shown in Figure 5.

Next, the provision of prefabricated pieces (4, 5), as shown in Figure 6, comprising: - a concrete beam (4) provided with a first end (41), a second end (42), a base (43) from which reinforcing rods (44) protrude laterally, and an upper section (45) from which reinforcing rods (46) protrude from the second end of the beam and, - a steel strut (5) with a first end embedded in the corresponding beam (4) and a second end (51) that protrudes in the longitudinal direction with an upward inclination relative to said beam (4) and having connecting bolts (51).

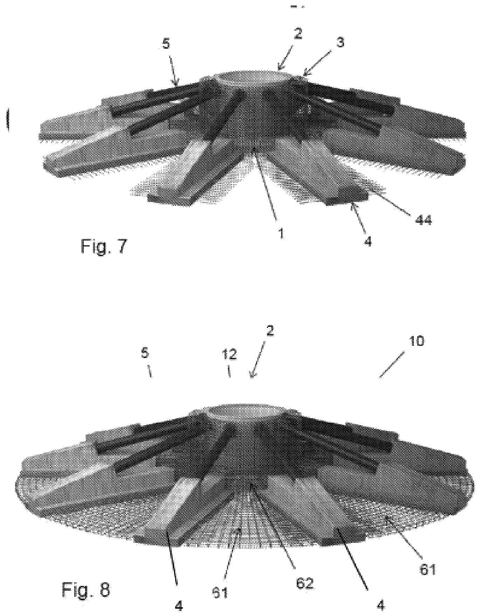

Said prefabricated pieces (4, 5) are placed on the ground, radially arranged with respect to the central ferrule (2) and evenly distributed around it, as shown in Figure 7; so that the second end (42) of the beams faces the perimeter of the central reinforcing mesh (1) and the second end (51) of the struts (5), bearing connecting bolts (52), is housed in the central assembly (3).

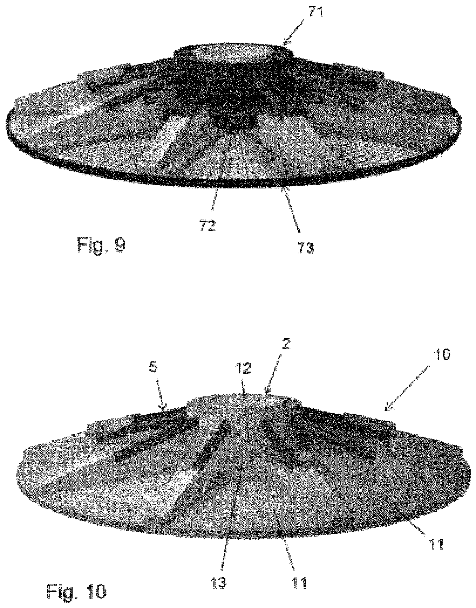

Next, the assembly (61) of the sections between the bases (43) of the beams (4) and the massive block (62) of the central assembly (3) in the area facing the beams (4) is made, as shown in Figure 8, and the installation of formwork (71, 72, 73) around the central assembly (3), the massive block (62) of the central assembly (3) and the outer perimeter of the bases (43) of the beams (4) and the assemblies (61) existing between them is carried out as shown in Figure 9.

Finally, the simultaneous concreting of all the formwork areas is made to obtain the foundation (10) represented in Figures 1 and 10 that integrates the metal parts, i.e. the central ferrule (2) and the struts (5) and that comprises portions of slab (11) between the beams (4), the central concrete ferrule (12), the central massive block (13) and the concrete beams (4) themselves.

The ribbed foundation constructed according to the method described above, and represented in Figures 1 and 9, comprises: a monolithic concrete foundation (10) and steel struts (5) with their ends embedded in said monolithic concrete foundation (1).

The monolithic concrete foundation (10) comprises a reinforced concrete slab (11) from the top of which protrude: a central concrete ferrule (12), a central reinforced concrete massive block (13) arranged around said central ferrule (12) and of lower height than said central ferrule (12), and concrete beams (4) arranged radially around the central massive block (13).

The steel struts (5) are radially arranged around the central concrete ferrule and aligned with the respective beams (4) and they comprise: a first end embedded in the corresponding concrete beam (4) and a second end (51) that protrudes in the longitudinal direction with an upward inclination relative to said beam (4) and is embedded in the central concrete ferrule.

As can be seen in the example shown, the central steel ferrule (2) has its upper end exposed and provided with a plurality of holes (21) for anchoring the wind turbine.

Once the nature of the invention as well as an example of preferred embodiment have been sufficiently described, it is stated for all pertinent purposes that the materials, form, size and arrangement of the elements described are susceptible to changes, provided these do not involve an alteration of the essential features of the invention which are claimed below.

## Claims

1. A method for constructing a ribbed foundation for wind turbines comprising:
- placing a central reinforcing mesh (1) on the ground;
- providing a central steel ferrule (2) having connecting bolts (21) on its outer surface,
- placing said central ferrule (2), with its geometrical axis in vertical position, on the central reinforcing mesh (1),
- installing a central assembly (3) around the central ferrule (2), so that the connecting bolts (21) are housed in said central assembly (3).
- providing prefabricated pieces (4, 5), comprising:
- a concrete beam (4) having a first end (41), a second end (42), a base (43) from which reinforcing rods (44) protrude laterally, and an upper section (45) from which reinforcing rods (46) protrude from the second end of the beam and,
- a steel strut (5) with a first end embedded in the corresponding beam (4) and a second end (51) that protrudes in the longitudinal direction with an upward inclination relative to said beam (4) and having connecting bolts (51);
- placing said prefabricated pieces (4, 5) on the ground, radially arranged with respect to the central ferrule (2) and evenly distributed around it; so that the second end (42) of the beams faces the perimeter of the central reinforcing mesh (1) and the second end (51) of the struts (5), bearing connecting bolts (52), is housed in the central assembly (3);
- assembling (61) the sections comprised between the bases (43) of beams (4), and the massive block (62) of the central assembly (3) in the area facing the beams (4);
- installing the formworks (71, 72, 73) around the central assembly (3), the massive block (62) of the central assembly (3) and the outer perimeter of the bases (43) of the beams (4) and of the assemblies (61) existing between them;
- obtaining, by means of the simultaneous concreting of all the formwork areas, a monolithic concrete foundation (10) that integrates the metal parts and that includes: portions of the slab (11) between the beams (4), a central concrete ferrule (12), a central massive block (13) and the concrete beams (4) themselves.

2. The method according to claim 1, **characterised in that** it comprises the use of a central steel ferrule (2), with a cylindrical or polygonal section, and with vertical axis, which is arranged internally with respect to the central concrete ferrule (12).

3. The method according to any one of the preceding claims, **characterised in that** it comprises the use of a central steel ferrule (2) having a welded flange at its upper end for screwing the tower of the wind turbine onto it.

4. A ribbed foundation for wind turbines constructed according to the method of the preceding claims; **characterised in that** it comprises:
- a monolithic concrete foundation (10) comprising a reinforced concrete slab (11) from the top of which protrude: a central reinforced concrete ferrule (12) in which a central steel ferrule (2) is embedded, a central concrete massive block (13) arranged around said central ferrule (12) and of lower height than said central ferrule (12), and reinforced concrete beams (4) arranged radially around the central massive block (13), and
- steel struts (5) radially arranged around the central concrete ferrule and comprising: a first end embedded in the corresponding concrete beam (4) and a second end (51) that protrudes in the longitudinal direction with an upward inclination relative to said beam (4) and is embedded in the central concrete ferrule.

5. The foundation, according to claim 4, **characterised in that** the central steel ferrule (2) has an exposed upper end provided with a plurality of anchoring holes (21) for the wind turbine.
